## Europäisches Patentamt
## European Patent Office
## Office européen des brevets

(19)

(11) Publication number: **0 031 216**
**B1**

(12) **EUROPEAN PATENT SPECIFICATION**

(45) Date of publication of patent specification: **31.10.84**

(51) Int. Cl.³: **G 11 B 5/12, G 11 B 5/20**

(21) Application number: **80304460.1**

(22) Date of filing: **11.12.80**

(54) **A magnetic head for a perpendicular magnetic recording system.**

(30) Priority: **13.12.79 JP 162324/79**

(43) Date of publication of application:
**01.07.81 Bulletin 81/26**

(45) Publication of the grant of the patent:
**31.10.84 Bulletin 84/44**

(84) Designated Contracting States:
**DE FR GB NL**

(56) References cited:
**DE-A-1 807 184**
**DE-A-2 658 956**
**FR-A-2 231 070**
**GB-A-1 186 210**
**US-A-2 185 300**
**US-A-2 920 379**
**US-A-3 120 001**
**US-A-3 230 517**

**PATENTS ABSTRACTS OF JAPAN, vol. 3, no.
56, 15th May 1979, page 14 E 110, Tokyo, JP**

(73) Proprietor: **FUJITSU LIMITED
1015, Kamikodanaka Nakahara-ku
Kawasaki-shi Kanagawa 211 (JP)**

(72) Inventor: **Oshiki, Mitsumasa
907-9-504, Kuriki-cho
Isogo-ku Yokohama-shi Kanagawa 235 (JP)**
Inventor: **Kawakami, Susumu
3-3-5-201, Ochiai
Tama-shi Tokyo, 191-02 (JP)**

(74) Representative: **Bedggood, Guy Stuart et al
Haseltine Lake & Co. Hazlitt House 28
Southampton Buildings Chancery Lane
London WC2A 1AT (GB)**

Courier Press, Leamington Spa, England.

# Description

This invention relates to a magnetic head for a perpendicular magnetic recording system.

As is well known, generally speaking, there are two kinds of magnetic recording mode. One mode utilises longitudinal residual magnetisation at the surface of a recording medium, while the other mode utilises perpendicular residual magnetisation. The longitudinal magnetic recording mode has generally been employed previously, but investigation and development in relation to the perpendicular magnetic recording mode are being widely pursued because this mode can provide higher recording density as compared with the longitudinal recording mode.

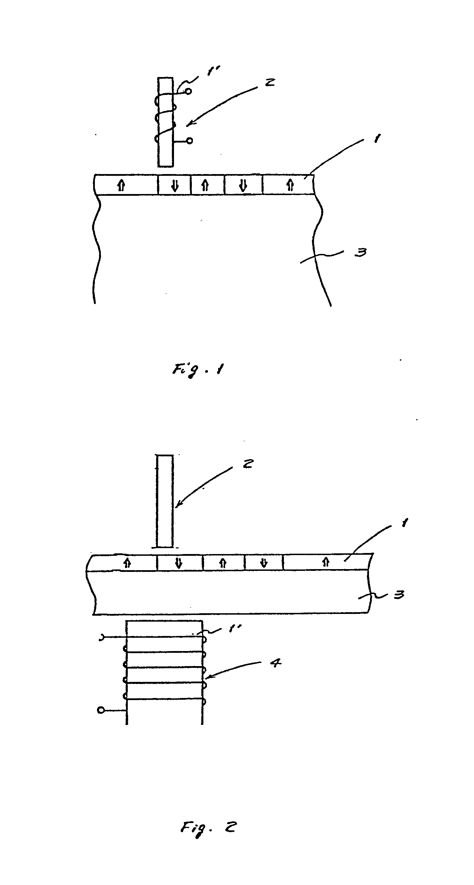

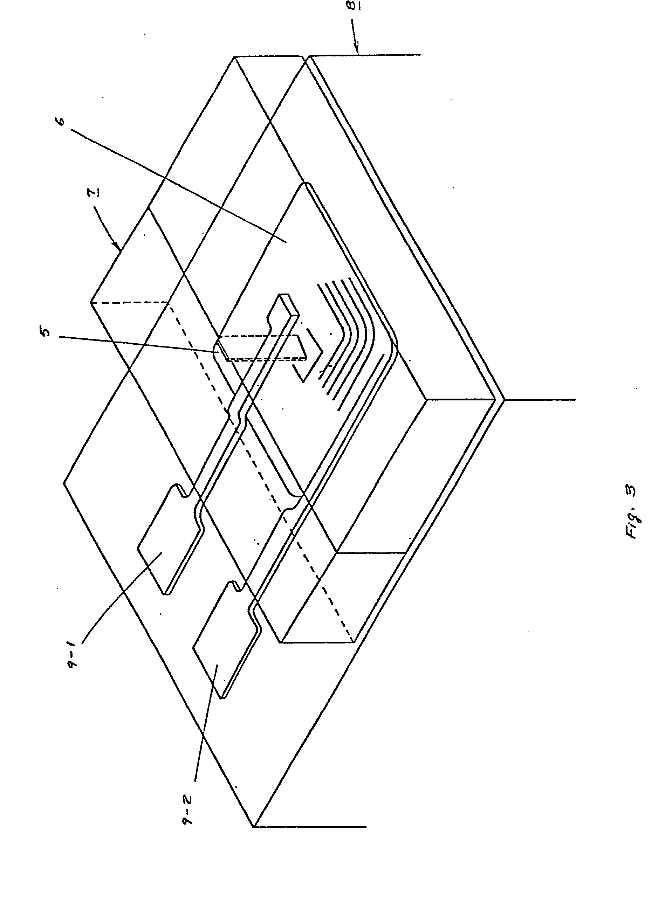

For the perpendicular recording mode, systems as shown in Figures 1 and 2 of the accompanying drawings, which are schematic diagrams, are currently known.

Namely, there is known a perpendicular magnetic recording system using a magnetic head obtained by providing a main pole piece 2, as indicated in Figure 1, over a perpendicular magnetic recording medium in which a Co—Cr alloy film 1 having magnetic anisotropy in the perpendicular direction is provided on a plastic or aluminium base material 3, and by forming a coil 1' around the main pole piece 2.

This recording system is generally called the main pole excitation system.

Also known is a perpendicular magnetic recording system having a magnetic head as indicated in Figure 2, wherein a main pole piece 2 and an auxiliary pole piece 4 are provided in relation to a perpendicular magnetic recording medium as indicated in Figure 1 mutually facing the medium, and a coil 1' is formed around the auxiliary pole piece 4. This system is generally called the auxiliary pole excitation system.

In such perpendicular magnetic recording systems, perpendicular magnetic recording is carried out as indicated in Figures 1 and 2 on the recording medium by exciting the coil 1' of the magnetic head.

Such perpendicular recording systems, however, have disadvantages as explained below.

In the perpendicular recording system employing the main pole excitation method illustrated in Figure 1, the main pole piece 2 itself determines the recording density of the recording medium and is designed to be of very small size. For this reason, it is difficult to form a coil having a large number of turns on the main pole piece 2, and as a result an intensified magnetic field cannot be generated.

In addition, since the coil is formed around the main pole piece 2, the coil cannot be made of a large size and therefore it is difficult to generate a sharp magnetic field for the recording medium.

Moreover, recently, thin film magnetic heads are often employed for purposes of miniaturization, but if the use of a thin film magnetic head is attempted in the system of Figure 1 formation of a coil becomes difficult and the manufacturing processes become complicated.

On the other hand, in the case of the auxiliary pole excitation system illustrated in Figure 2, recording on the recording medium is effected by concentrating the magnetic flux generated by the auxiliary pole 4 into the main pole 2, and the recording efficiency is rather bad because the magnetic film of the recording medium 1 and the magnetic field generation position are spaced apart.

Moreover, the coil 1' has a large inductance and it is difficult to drive such a magnetic head at a high speed.

Since the main pole 2 and the auxiliary pole 4 are provided face to face on opposite sides of the recording medium, the auxiliary pole excitation system cannot be used in a magnetic recording system in which the recording medium has a thick substrate, such as a magnetic disc unit.

Further, US—A—3 120 001 discloses a magnetic head for a perpendicular magnetic recording system. The head has a writing coil and a main pole piece of magnetic material, which is aligned with the centreline of the coil, serves to direct a magnetic flux generated by the coil from the main pole piece perpendicular of a recording medium with which the head is employed. The main pole piece is formed as a thin film of magnetic material. The writing coil and the main pole piece are on the same side of the recording medium with which the head is employed.

The coil is linked with a magnetic core around which it is wound.

According to the present invention there is provided a magnetic head, for a perpendicular magnetic recording system, having a coil and a main pole piece, provided by a thin film of magnetic material, which is aligned with the centreline of the coil for directing a magnetic flux generated by the coil from the main pole piece perpendicular to a recording medium with which the head is employed,

characterised in that the head comprises

a first substrate member, having first and second substrate portions with respective corresponding side edges, the main pole piece being formed as a thin ferromagnetic film on one of said corresponding side edges, the other of said corresponding side edges being bonded thereto,

a second substrate member having a main face bonded to a main face of the first substrate member, the coil being formed as a flat thin film coil on one of the bonded main faces so that the main pole piece is positioned vertically with respect to the centre of the flat thin film coil,

thereby to provide an integrated structure for the magnetic head.

In this way the main pole piece is completely protected by the first and second substrate portions, and the resulting first substrate member provided when the side edges of those substrate portions are bonded offers flat main faces.

The second substrate member, which may be either a unitary ferromagnetic member or a composite member with a non-magnetic part on which a ferromagnetic thin film is formed, in both cases offers flat main faces.

The flat thin film coil can readily be formed on a main face of either first or second substrate member without substantially affecting the flatness of the main face.

Flat main faces of the substrate members, one carrying the flat thin film coil, can readily be bonded together with the main pole piece vertical of the centre of the coil. Thus the flat thin film coil and the main pole piece are completely protected.

This invention provides a magnetic head with an integrated structure which is simple and rugged.

In comparison with an embodiment of the present invention the magnetic head structure of US—A—3 120 001 is complicated. Moreover in that head structure the coil is wound around a core, and if an increased number of coil windings is required the core must be made of relatively large size. In magnetic head embodying the present invention the flat thin film coil is formed on a substrate member and an increased number of coil windings can readily be provided on the substrate member.

In the magnetic head structure of US—A—3 120 001 the main pole piece and the core are fixed by individual yokes. In the present invention, by virtue of the integrated structure, no such yokes are needed.

Reference is made, by way of example, to the accompanying drawings, in which:—

Figure 1 is a schematic diagram for explanation of a magnetic head for a conventional perpendicular magnetic recording system employing the main pole excitation system,

Figure 2 is a schematic diagram for explanation of a magnetic head for a conventional perpendicular magnetic recording system employing the auxiliary pole excitation system,

Figure 3 is a schematic perspective view of a magnetic head, for a perpendicular magnetic recording system, embodying the present invention,

Figure 4 is an enlarged cross-sectional view of the head of Figure 3,

Figure 5 is a graph illustrating the characteristics of magnetic field generated by a coil of a magnetic head, of a vertical magnetic recording system, embodying the present invention,

Figure 6 is a graph illustrating the vertical distribution characteristic of the magnetic field of a magnetic head, of a perpendicular magnetic recording system, embodying the present invention, and

Figures 7 to 15 are respective schematic cross-sectional views of respective further magnetic heads, for perpendicular magnetic recording systems, embodying the present invention.

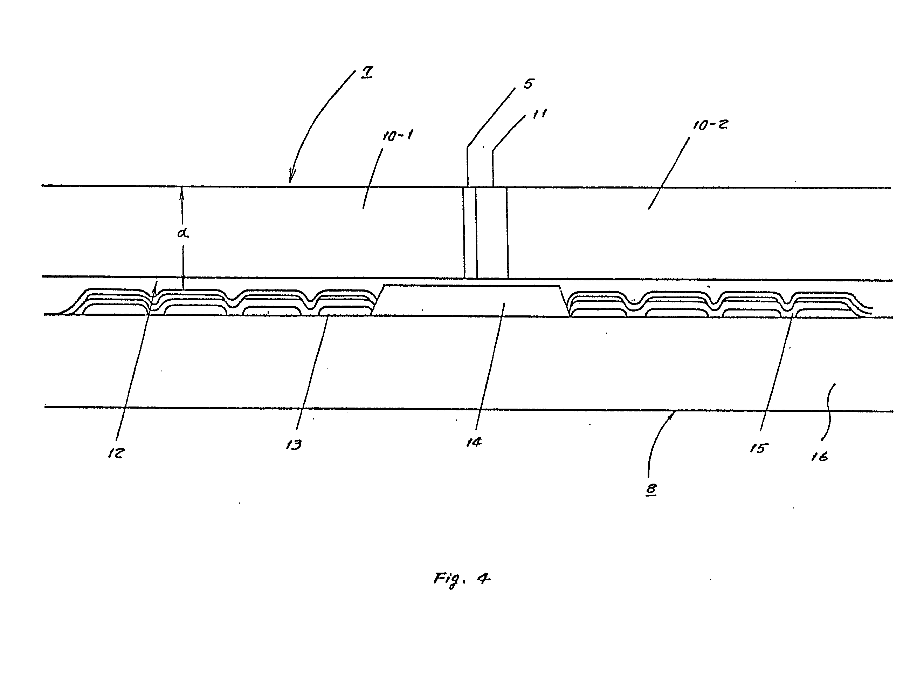

A magnetic head embodying the present invention for a perpendicular magnetic recording system will be explained with reference to Figures 3 to 6. As is clear particularly from Figure 4, a main pole 5 is obtained by evaporating or sputtering or plating a ferromagnetic thin film such as permalloy onto a side edge of an insulated glass substrate portion 10-1. A main pole block 7 is obtained by bonding the side edge of insulated glass substrate portion 10-1 on which the main pole 5 is formed to a corresponding side edge of an insulated glass substrate portion 10-2 with a bonding layer 11 together, as can be seen, the substrate portions 10-1 and 10-2 form substrate member with flat main faces. The cross-section of the main pole 5 is about $4\mu m \times 70\mu m$, while the thickness of the bonding layer 11 is about $20\mu m$.

A ferromagnetic substrate member 16 is made of, for example, NiZn ferrite. A flat coil 6, as can be seen, is formed on the ferromagnetic substrate 16 by means of thin film technology, for example, evaporation or sputtering and a magnetic core 14 of permalloy for example, is formed in the same way at the centre of the thin film coil 6. The flat thin film coil 6 is, for example, a laminated coil of $5 \times 2$ turns, and an insulation layer 15 such as $SiO_2$ is provided between the first and second layers or laminations. The cross-section of a conductor 13 of which the thin film coil 6 is made is, for example, $4\mu m \times 30\mu m$. In addition, the size of magnetic core 14 is, for example, about $12\mu m \times 100\mu m \times 100\mu m$. A coil block 8 can be obtained by forming the flat thin film coil 6 and the magnetic core 14 on the ferromagnetic substrate 16. The main pole block 7 and the coil block 8 (the substrate member 10-1, 10-2 and substrate member 16) are bonded by means of a bonding layer 12. Depth d from the surface of the main pole block 7 to the thin film coil 6 is, for example, about 50 $\mu m$.

In Figure 3, 9-1 and 9-2 are supply terminals or pads for coil 6.

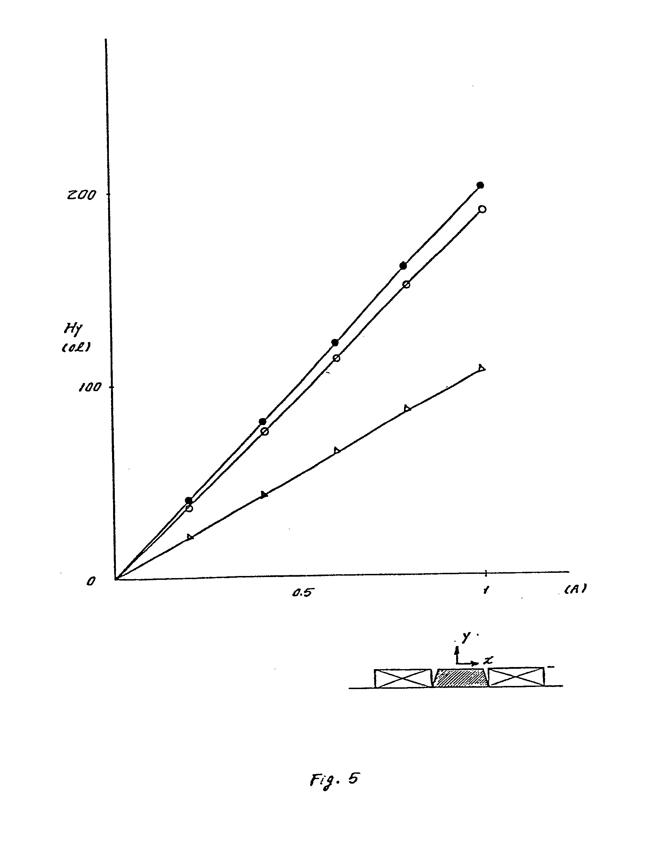

The graph of Figure 5 illustrates the magnetic field generation characteristic of the coil of Figures 3 and 4. The characteristic indicated in Figure 5 was measured by using models obtained by magnifying 100 times a coil similar to that shown in Figure 4. The coil had a winding of 180 turns and magnetic field intensity was measured just above the centre of the coil. In Figure 5 the line obtained by plotting through triangle marks indicates characteristic when no ferromagnetic substrate (16) was provided at the rear side of the coil, while the line obtained by plotting through circles indicates a characteristic when the ferromagnetic substrate was provided at the rearside of the coil, and the curve obtained by plotting through the black dots indicates the characteristic when a ferromagnetic core (14) was provided at the coil centre and the ferromagnetic substrate was provided at the rear side of the coil. As will be obvious from Figure 5, when the ferromagnetic material is provided at the rear side of the coil, an intensified magnetic field is generated, and when the magnetic core is provided at the coil centre, magnetic field intensity is improved by about 30%.

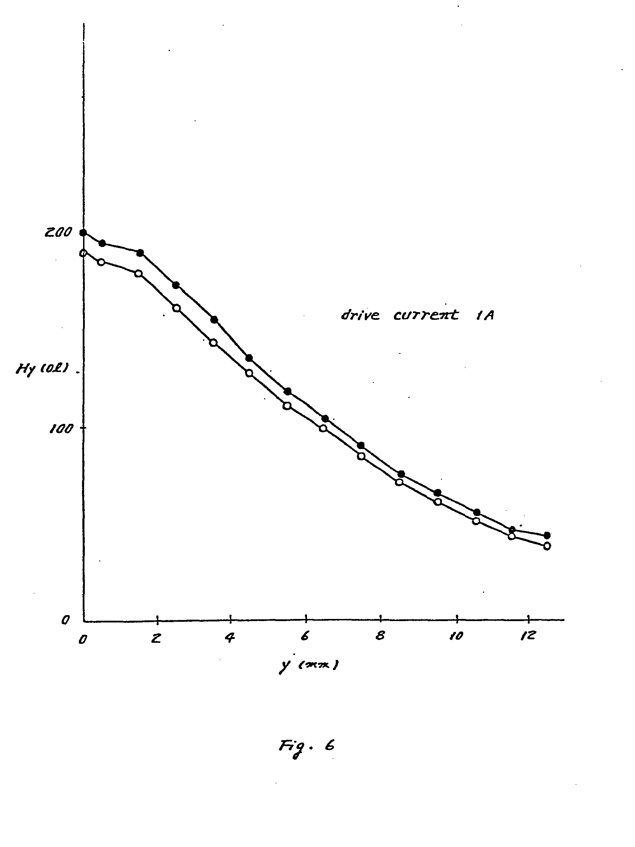

Figure 6 shows a vertical distribution characteristic of magnetic field obtained using models as for Figure 5. The lines obtained by plotting through circles and black dots relate to the same cases as in Figure 5. As is clear from Figure 6, the magnetic field is reduced with increasing vertical distance (y) but the magnetic field when a core exists is larger than that when a core does not exist.

The magnetic field required of a coil for saturated writing of a Co—Cr layer is con-

sidered to be about 150Oe (120000 A/m), when measured at the end of the main pole. From Figure 5, the AT (ampere turns) required for obtaining 150Oe is 220 AT at a region spaced apart by 5mm from the coil surface. In the case of the actual head, the AT becomes 2.2 AT at a region spaced apart by 50$\mu$m from the coil surface and when a coil of 10 turns is obtained, saturated writing can be realized with a driving current of 200 mA. A thin film coil with 10 flat winding turns can be obtained easily and in this case the inductance of the coil is about 0.1$\mu$H. In the conventional auxiliary pole excitation system, coil inductance is about 100$\mu$H. From this it will be seen that an embodiment of this invention can greatly improve speed of operation as compared with the convention auxiliary pole excitation system. A head embodying the present invention and conventional heads are compared in the following table. In the table, the current value indicated is that necessary for generation of a coil magnetic field of 150 Oe (12000 A/m).

| Excitation system | Shape | No. of turns | Current | Inductance |
|---|---|---|---|---|
| Auxiliary pole | 0.7×3×1.5mm | 100 turns | 0.2 A | 100$\mu$H |
| Main pole | 0.01×0.5×0.03 | 3-turns | 1 A | 0.001$\mu$H |
| Present invention | 1×1×0.1 | 10 turns | 0.22 A | 0.1$\mu$H |

As will be apparent from the above table, an embodiment of the present invention can provide a magnetic head for a vertical magnetic recording system having only the merits of both the auxiliary pole excitation system and the main pole excitation system.

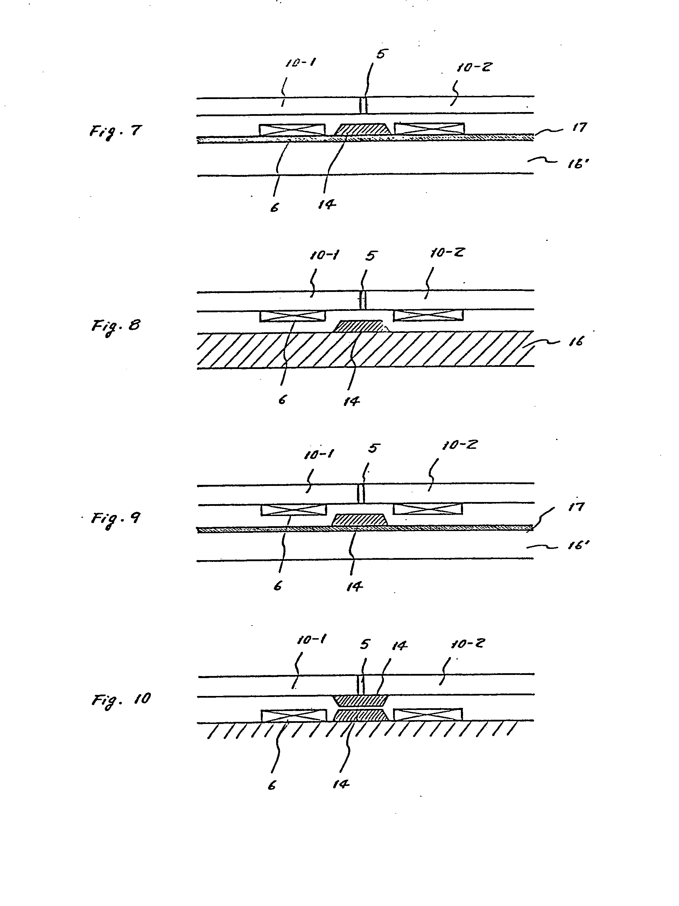

Figures 7 to 15 illustrate respective further embodiments of this invention. In these figures 16' is a nonmagnetic substrate part, and 17 is a ferromagnetic thin film layer. Portions similar to those in Figures 3 and 4 are given the same reference symbols.

In the embodiment of Figure 7, a composite substrate member in which a ferromagnetic thin film 17 is formed on a non-magnetic substrate 16' is used in place of the ferromagnetic substrate member 16 in the embodiment of Figures 3 and 4.

In the embodiment of Figure 8, a flat thin film coil 6 is formed on the glass substrates 10-1 and 10-2 providing an upper block, after bonding of the glass substrate portion 10-1 having the main pole 5 to the glass substrate portion 10-2. The magnetic core 14 is formed on a lower block on the ferromagnetic substrate member 16, and the lower and upper blocks are coupled.

In the embodiment of Figure 9, a composite substrate member in which a ferromagnetic thin film 17 is formed on a nonmagnetic substrate 16' is used in place of the ferromagnetic substrate member in the embodiment of Figure 8.

In the embodiment of Figure 10, a magnetic core 14 is formed on the upper block after bonding of the glass substrate portion 10-1 bearing the main pole 5 to the glass substrate portion 10-2, and a magnetic core 14 and a flat thin film coil 6 are formed on the lower block, on the head substrate, and upper and lower blocks are coupled. As the head substrate, either a ferromagnetic substrate or a composite substrate may be used.

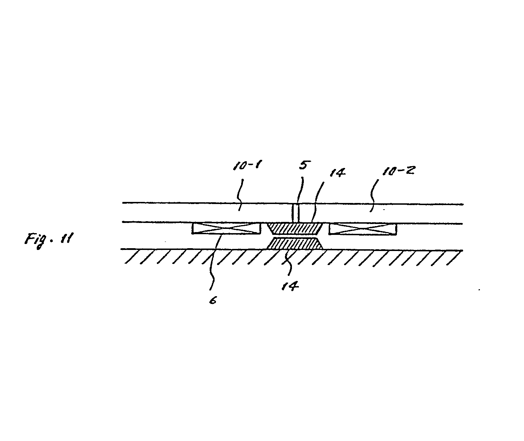

In the embodiment of Figure 11, the thin film coil 6 and a magnetic core 14 are formed on the upper block obtained after bonding of glass substrate portion 10-1 bearing the main pole 5 to the glass substrate portion 10-2, and the lower block, having a magnetic core 14 on the head substrate, is coupled to the upper block.

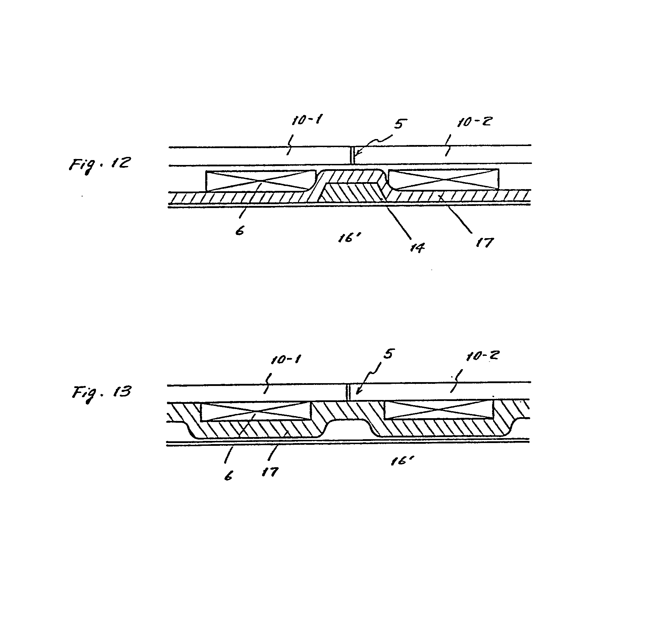

In the embodiment of Figure 12, a lower block is formed in which the coil 6 is on a composite substrate member obtained by forming a ferromagnetic core 14 and a ferro- magnetic thin film 17 on a non-magnetic substrate part 16', and an upper block is obtained by bonding the glass substrate portion 10-1 bearing the main pole 5 to the glass substrate portion 10-2, and the blocks are coupled. Ferromagnetic cores 14 may be provided on both upper and lower blocks.

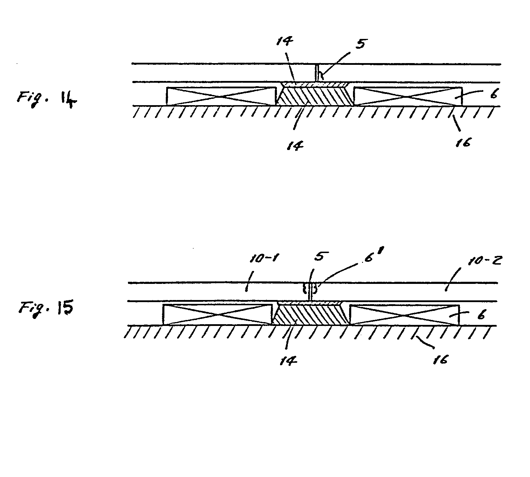

In the embodiment of Figure 13, in place of the separate ferromagnetic core 14 and the ferromagnetic thin film 17 as in the embodiment of Figure 9, the ferromagnetic thin film 17 is so formed on the upper block, after formation of coil 6, as to provide both a ferromagnetic core and a ferro-magnetic thin film in one unit. The non-magnetic substrate 16' in Figure 13 may be replaced by a magnetic substrate.

In the embodiment of Figure 14, the main pole piece 5 used in the embodiments of Figures 1 to 13 is provided with a magnetic flux focusing structure in order to improve characteristics. The magnetic flux focusing structure is classified into a structure for focusing the magnetic flux to the end from the point of view of shape and structure for focusing the magnetic flux from the point of view of magnetic characteristic of the main pole piece.

In the embodiment of Figure 15 a coil 6' is arranged at the end of the main pole in order to improve reproduction efficiency.

## Claims

1. A magnetic head, for a perpendicular magnetic recording system, having a coil (6) and a main pole piece (5), provided by a thin film of magnetic material, which is aligned with the centreline of the coil (6) for directing a magnetic flux generated by the coil (6) from the main pole piece (5) perpendicular to a recording medium with which the head is employed,
    characterised in that the head comprises
    a first substrate member (10-1, 10-2), having first (10-1) and second (10-2) substrate portions with respective corresponding side edges, the main pole piece (5) being formed as a thin ferromagnetic film (5) on one of said corresponding side edges, the other of said corresponding side edges being bonded thereto,
    a second substrate member (16; 16', 17) having a main face bonded to a main face of the first substrate member (10-1, 10-2), the coil (6) being formed as a flat thin film coil (6) on one of the bonded main faces so that the main pole piece is positioned vertically with respect to the centre of the flat thin film coil,
    thereby to provide an integrated structure for the magnetic head.

2. A magnetic head as claimed in claim 1, wherein the coil (6) is formed on the said main face of the second substrate member (16).

3. A magnetic head as claimed in claim 1, wherein the coil (6) is formed on the said main face of the first substrate member (10-1, 10-2).

4. A magnetic head as claimed in claim 1, 2 or 3, wherein the second substrate member (16; 16', 17) is a ferromagnetic member (16).

5. A magnetic head as claimed in claim 1, 2 or 3, wherein the second substrate member (16; 16', 17) is a composite member (16', 17) having a nonmagnetic substrate part (16') and a ferromagnetic thin film part (17) formed on the nonmagnetic substrate part (16').

6. A magnetic head as claimed in any preceding claim, wherein a magnetic core (14) is arranged on either of the first substrate member (10-1, 10-2) or the second substrate member (16; 16', 17) in alignment with the centre of the coil (6) so that the magnetic field generated by the coil (6) flows through the magnetic core (14) to the main pole piece (5).

7. A magnetic head as claimed in claim 6, comprising a further magnetic core (14) arranged on either the second substrate member (16; 16', 17) or the first substrate member (10-1, 10-2) in alignment with the magnetic core (14) of claim 6.

8. A magnetic head as claimed in any preceding claim, further comprising a coil (6') arranged at the end of said main pole (5) for improving reproduction efficiency.

9. A magnetic head as claimed in any preceding claim wherein the thin ferromagnetic film (5) forming the main pole piece (5) has a thickness of approximately 4μm.

## Revendications

1. Tête magnétique, pour un système d'enregistrement magnétique perpendiculaire, comportant une bobine (6) et une pièce polaire principale (5), constituée d'un matériau magnétique en couche mince, qui est alignée avec la ligne centrale de la bobine (6) pour diriger un flux magnétique engendré par la bobine (6) à partir de la pièce polaire principale (5) perpendiculairement à unt support d'enregistrement avec lequel la tête est utilisée, caractérisée en ce que cette tête comprend:

— un premier élément de substrat (10-1, 10-2), comportant des première (10-1) et seconde (10-2) parties de substrat avec des bords latéraux correspondants respectifs, la pièce polaire principale (5) étant formée comme une couche mince ferromagnétique (5) sur un desdits bords latéraux correspondants, l'autre bord latéral correspondant étant soudé à celle-ci,

— un second élément de substrate (16; 16', 17) comportant une face principale soudée à une face principale du premier élément de substrate (10-1, 10-2), la bobine (6) étant formée comme une bobine en couche mince plate (6) sur une des faces principales soudées de sorte que la pièce polaire principale est positionnée verticalement par rapport au centre de la bobine en couche mince plate, une structure intégrée pour la tête magnétique étant ainsi obtenue.

9     0 031 216     10

2. Tête magnétique selon la revendication 1, caractérisé en ce que la bobine (6) est formée sur la face principale du second élément de substrat (16).

3. Tête magnétique selon la revendication 1, caractérisée en ce que la bobine (6) est formée sur la face principale du premier élément de substrat (10-1, 10-2).

4. Tête magnétique selon l'une quelconque des revendications 1 à 3, caractérisé en ce que le second élément de substrat (16; 16', 17) est un élément ferromagnétique (16).

5. Tête magnétique selon l'une quelconque des revendications 1 à 3, caractérisée en ce que le second élément de substrat (16; 16', 17) est un élément composé (16', 17) comportant une partie de substrat non magnétique (16') et une partie en couche mince ferromagnétique (17) formée sur la partie de substrat non magnétique (16').

6. Tête magnétique selon l'une quelconque des revendications 1 à 5, caractérisée en ce qu'un noyau magnétique (14) est disposé sur le premier élément de substrat (10-1, 10-2) ou sur le second élément de substrat (16; 16', 17) en étant aligné avec le centre de la bobine (6) de sorte que le champ magnétique engendré par la bobine (6) traverse le noyau magnétique (14) jusqu'à la pièce polaire principale (5).

7. Tête magnétique selon la revendication 6, caractérisée en ce qu'elle comprend un autre noyau magnétique (14) disposé sur le second élément de substrat (16; 16', 17) ou sur le premier élément de substrat (10-1, 10-2) en étant aligné avec le noyau magnétique (14) défini dans la revendication 6.

8. Tête magnétique selon l'une quelconque des revendications 1 à 7, caractérisée en ce qu'elle comprend en outre une bobine (6') disposée à l'extrémité du pôle principal (5) pour améliorer le rendement de reproduction.

9. Tête magnétique selon l'une quelconque des revendications 1 à 8, caractérisée en ce que la couche mince ferromagnétique (5) constituant la pièce polaire principale (5) a une épaisseur d'environ $4\mu$m.

**Patentansprüche**

1. Magnetkopf für ein senkrechtes magnetisches Aufzeichnungssystem, mit einer Spule (6) und einem Hauptpolstück (5) das von einer dünnen Schicht aus magnetischem Material gebildet ist, welches mit der Mittellinie der Spule (6) ausgerichtet ist, um einen von der Spule (6) erzeugten magnetischen Fluß von dem Hauptpolstück (5) senkrecht zu einem Aufzeichnungsmedium zu richten, mit dem der Kopf verwendet wird,

dadurch gekennzeichnet, daß der Kopf umfaßt:

ein erstes Substratteil (10-1, 10-2), welches
   einen ersten Substratabschnitt (10-1) und einen zweiten Substratabschnitt (10-2) mit entsprechenden Seitenkanten hat, wobei das Hauptpolstück (5) als eine dünne ferromagnetische Schicht (5) auf einer der genannten entsprechenden Seitenkanten ausgebildet ist, an welche die andere der genannten entsprechenden Seitenkanten, angeklebt ist,

une ein zweites Substratteil (16; 16', 17), dessen eine Hauptoberfläche an eine Hauptoberfläche des ersten Substratteils (10-1, 10-2) geklebt ist, wobei die Spule (6) als eine Dünnschicht-Spule (6) auf einer der zusammengeklebten Hauptoberfläche so gebildet ist, daß das Hauptpolstück bezüglich der Mittellinie der flachen Dünnschichtspule vertikal positioniert ist,

um dadurch eine integrierte Struktur für einen Magnetkopf zu bilden.

2. Magnetkopf nach Anspruch 1, bei welchem die Spule (6) auf der genannten Hauptoberfläche des zweiten Substratteils (16) gebildet ist.

3. Magnetkopf nach Anspruch 1, bei welchem die Spule (6) auf dern genannten Hauptoberfläche des ersten Substratteils (10-1, 10-2) gebildet ist.

4. Magnetkopf nach Anspruch 1, 2 oder 3, bei welchem das zweite Substratteil (16; 16', 17) ein ferromagnetisches Teil (16) ist.

5. Magnetkopf nach Anspruch 1, 2 oder 3, bei welchem das zweite Substratteil (16, 16', 17) ein zusammengesetztes Teil (16', 17) ist, das einen nicht-magnetischen Substratabschnitt (16') und einen auf dem nichtmagnetischen Substratabschnitt (16') gebildeten ferromagnetischen Dünnschichtabschnitt (17) umfaßt.

6. Magnetkopf nach einem der vorhergehenden Ansprüche, bei welchem ein Magnetkern (14) entweder auf dem ersten Substratteil (10-1, 10-2) oder auf dem zweiten Substratteil (16; 16', 17) mit der Mittellinie der Spule (6) ausgerichtet vorgesehen ist, so daß das von der Spule (6) erzeugte magnetische Feld durch den magnetischen Kern (14) zu dem Hauptpolstück (5) fließt.

7. Magnetkopf nach Anspruch 6, mit einem weiteren Magnetkern (14) der auf dem zweiten Substratteil (16; 16', 17) oder auf dem ersten Substratteil (10-1, 10-2) in Ausrichtung mit dem Magnetkern (14) nach Anspruch 6 angeordnet ist.

8. Magnetkopf nach einem der vorhergehenden Ansprüche, der ferner eine Spule (6') umfaßt, die an dem Ende des genannten Hauptpols (5) angeordnet ist, um den Wirkungsgrad der Reproduktion zu erhöhen.

9. Magnetkopf nach einem der vorhergehenden Ansprüche, bei welchem die dünne ferromagnetische Schicht (5), welche das Hauptpolstück (5) bildet, eine Dicke von etwa $4\mu$m hat.

Fig . 1

Fig . 2

1

Fig. 3

Fig. 4

0 031 216

Fig. 5

Fig. 6

Fig. 7

*10-1*   *5*   *10-2*

*17*

*16'*

*6*   *14*

Fig. 8

*10-1*   *5*   *10-2*

*16*

*6*   *14*

Fig. 9

*10-1*   *5*   *10-2*

*17*

*16'*

*6*   *14*

Fig. 10

*10-1*   *5*   *14*   *10-2*

*6*   *14*

Fig. 11

Fig. 12

10-1   5   10-2

6   16'   14   17

Fig. 13

10-1   5   10-2

6   17   16'

Fig. 14

Fig. 15